# EUROPÄISCHE PATENTSCHRIFT

(11) **EP 2 487 090 B1**
(45) Veröffentlichungstag und Bekanntmachung des Hinweises auf die Patenterteilung: **05.11.2014**
(21) Anmeldenummer: 12000904.8
(22) Anmeldetag: 13.02.2012
(51) Int. Cl.: B62D 21/15, B62D 25/20

(54) **Querträger eines Kraftfahrzeugs und Kraftfahrzeug mit einem solchen Querträger**
Cross-member of a motor vehicle and motor vehicle with such a cross-member
Traverse d'un véhicule automobile et véhicule automobile doté d'une telle traverse

(30) Priorität: 11.02.2011 DE 102011010992
(43) Veröffentlichungstag der Anmeldung: 15.08.2012
(73) Patentinhaber: Audi AG, 85045 Ingolstadt (DE)
(72) Erfinder: Berthel, Marc, 01728 Goppeln (DE); Feindler, Nico, 70499 Stuttgart (DE)
(74) Vertreter: Patzelt, Heike Anna Maria

(56) Entgegenhaltungen:
- EP-A1- 2 193 982
- EP-A2- 2 011 719
- WO-A1-2010/055407
- WO-A1-2010/111553
- DE-A1- 19 943 296

## Beschreibung

Die Erfindung betrifft einen Querträger, insbesondere Sitzquerträger für eine Kraftfahrzeugkarosserie eines Kraftfahrzeug, insbesondere Personenkraftfahrzeug gemäß Oberbegriff des Patentanspruchs 1 sowie ein Kraftfahrzeug mit einem erfindungsgemäßen Querträger gemäß Oberbegriff des Patentanspruchs 12.

Um bei einem seitlichen Fahrzeugaufprall einen entsprechenden Überlebensraum für die Fahrzeuginsassen zu gewährleisten, muss der Schweller der Bodenstruktur einer Fahrzeugkarosserie möglichst viel Energie bei kleinstmöglichem Deformationsweg aufnehmen. Um eine energetisch ineffiziente Schwellerbiegung zu minimieren ist eine zusätzliche Abstützung des Schwellers im Bodenbereich der Bodenstruktur erforderlich. Diese Abstützung soll ein möglichst gleichmäßiges Kraftniveau über den gesamten Deformationsweg realisieren, um somit ein harmonisches Verformungsverhalten des Schwellers zu erzielen und eine Überdimensionierung der gesamten Bodenstruktur zu vermeiden, wobei insbesondere ein hoher Kraftpeak zu Beginn der Intrusion unerwünscht ist. Zusätzlich soll eine Anbindung der Fahrzeugsitze an die Fahrzeugkarosserie realisiert werden. Die Anbindungspunkte für die Sitze müssen aus Schwingungskomfort-gründen eine hohe Steifigkeit aufweisen und werden über Sitzschienen mit einem Sitzquerträger verbunden, der einenends mit dem Schweller und andernends mit einem Tunnel verbunden ist.

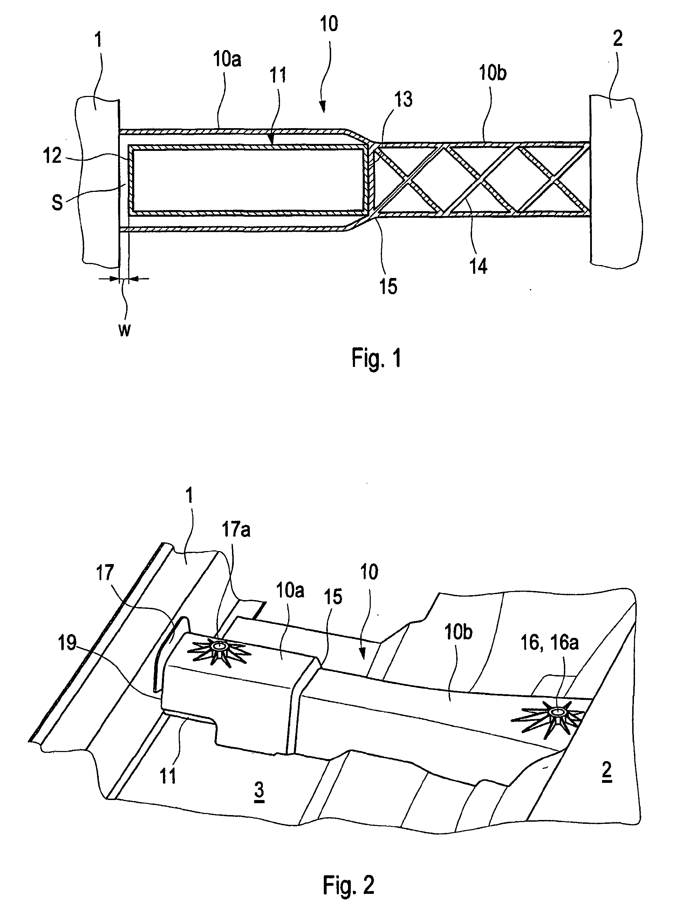

Es ist bekannt, für solche Sitzquerträger metallische Profile zu verwendet, die beim Seitenaufprall definiert Ausknicken. Dabei sind die Profile so ausgelegt, dass das Ausknicken erfolgt, bevor das Abstützvermögen des Mitteltunnels erreicht wird. Dadurch wird ein Verlust der gesamten Strukturintegrität vermieden. Die Sitzquerträger werden stoffschlüssig mit dem Schweller und dem Tunnel verbunden, um die Steifigkeitsanforderungen zu erfüllen. Einen solchen Verlauf der Abstützkraft F_{A} eines solchen bekannten Querträgers zeigt eine Kennlinie 1 des Kraft-Weg-Diagramms gemäß Figur 1. Bevor eine Abstützkraft F₁ des Mitteltunnels erreicht wird, knickt bspw. zu einem Zeitpunkt t₁ der Querträger ein, mit der Folge, dass die Abstützkraft steil auf kleine Werte absinkt.

Nachteilig hieran ist jedoch, dass die Abstützung des Schwellers nur über einen sehr kleinen Weg erfolgen kann, der nicht ausreicht um die gesamte kinetische Energie zu absorbieren. Dadurch steigt nach dem Ausknicken des Sitzquerträgers die Belastung des Schwellers durch dessen Biegung stark an und muss somit auf diese Belastung ausgelegt werden, wodurch ein höherer Materialeinsatz erforderlich wird und damit ein höheres Gewicht zur Folge hat.

Dieses Problem versucht die gattungsbildende DE 10 2004 012 500 A1 dadurch zu lösen, dass im Bereich des Sitzquerträgers der Bodenstruktur des Kraftfahrzeugs eine vom Sitzquerträger entkoppelte Querstrebe vorgesehen ist, die beiderseits mit einem Deformationselement zusammenwirkt, wobei die Deformationselemente in beiderseits der Aufbaustruktur verlaufenden Längsträgern positioniert sind. Neben der Aufnahme von zusätzlicher Aufprallenergie über die besagten Deformationselemente soll die entkoppelte Querstrebe eine weitere Seitenversteifung des beaufschlagten Längsträgers bewirken, indem sie Aufprallenergie auf den gegenüber liegenden, nicht beaufschlagten Längsträger überträgt bzw. sich an diesem entsprechend abstützt. Dadurch soll bei einem heftigen Seitencrash der beaufschlagte Längsträger weniger weit in den Fahrzeuginnenraum hinein verformt werden.
Weitere ähnliche Querträgers sind von EP 2011719 sowie WO 2010/055407 bekannt. Diese bekannte Lösung bedarf jedoch zu deren Umsetzung einen erhöhten konstruktiven Aufwand, da sowohl die Schweller als auch der Tunnel angepasst werden müssen, da die Deformationselemente in den Schwellern angeordnet sind und die zusätzliche Querstrebe verschiebbar durch den Tunnel bis zum gegenüberliegenden Schweller geführt wird. Ferner kann mit der formschlüssigen Aneinanderreihung des Deformationselementes zwischen der Außenwand des Schwellers und der Stirnseite der Querstrebe kein hohes und gleichförmiges gewichtsspezifisches Energieabsorptions-vermögen erreicht werden. Zudem führt diese bekannte Lösung aufgrund der zum Querträger zusätzlichen Querstrebe nicht zu einer wünschenswerten Gewichtseinsparung.

Aufgabe der Erfindung ist es, einen Querträger für eine Kraftfahrzeugkarosserie der eingangs genannten Art derart weiterzubilden, dass eine gleichmäßige Belastung des an dem Querträger angebundenen Längsträgers, insbesondere des Schwellers bei gleichzeitigem hohem und gleichförmigen Energieabsorptionsvermögen durch einen solchen Querträgers erzielt wird, ohne dabei eine große Gewichtszunahme der Kraftfahrzeugkarosserie in Kauf nehmen zu müssen.

Diese Aufgabe wird gelöst durch einen Querträger mit den Merkmalen des Patentanspruchs 1.

Bei einem solchen Querträger, insbesondere Sitzquerträger für eine Kraftfahrzeugkarosserie mit einem Deformationselement zur Absorption von in Richtung des Querträgers eingeleiteten Deformationsenergie, ist erfindungsgemäß vorgesehen, dass der Querträger mit einem ersten und zweiten Abschnitt ausgebildet ist, wobei der erste und zweite Abschnitt über eine Sollbruchstelle miteinander verbunden sind, ferner der erste Abschnitt des Querträgers ausgebildet ist zur Aufnahme des Deformationselements, welches sich einenends gegen den zweiten Abschnitt des Querträgers abstützt und andernends eine Triggereinrichtung aufweist, und die Sollbruchstelle derart ausgebildet ist, dass bei einem definierten Krafteintrag in den Querträger diese Sollbruchstelle bricht.

Dieser erfindungsgemäße Querträger zeichnet sich dadurch aus, dass durch die Anordnung des Deformationselementes in diesem Querträger, vorzugsweise eines Sitzquerträgers mit einer Triggereinrichtung zur Anbindung des Deformationselements an einen Längsträger bzw. Schweller die bei einem Seitencrash in den Querträger eingetragene kinetische Energie äußerst effizient absorbiert wird, d. h. der angebundene Längsträger bzw. Schweller wird gleichmäßig über den Crash-Vorgang abgestützt und ist dadurch weniger belastet, so dass hierdurch Gewichtseinsparungen realisiert werden können.

Das Deformationselement stützt sich gegen den Längsträger ab, wodurch ein energieabsorbierender Modus erzielt wird, mit der Folge, dass über die Intrusion eine gleichmäßige Kraft erzeugt wird, die den Längsträger bzw. Schweller während des Crashvorganges abstützt.

Die Triggereinrichtung am Ende des Deformationselementes bewirkt eine Verringerung der Initialkraft beim Beginn des Crashvorganges, die sich üblicherweise in einer besonders hohen Kraftspitze im Kraft-Weg-Diagramm äußert.

Der das Deformationselement aufnehmende erste Abschnitt des Querträgers, vorzugsweise des Sitzquerträgers bildet zusammen mit dem vorzugsweise eine Stützstruktur für das Deformationselement aufweisenden zweiten Abschnitt des Querträgers eine Sollbruchstelle, wodurch dieser erste Abschnitt zu einem zusätzlichen energieabsorbierenden Crash-Element wird.

Damit übernimmt ein solcher Querträger, vorzugsweise ein Sitzquerträger nicht nur die Funktion der steifen Anbindung von weiteren Elementen der Fahrzeugkarosserie an einen angebundenen Längsträger bzw. Schweller, insbesondere auch während des Crash-Vorgangs, sondern auch die Abstützung des Deformationselementes über die Dauer des Crash-Vorganges. Damit zeichnet sich ein solcher erfindungsgemäßer Querträger durch eine funktionale Trennung hinsichtlich der Crash-Anforderungen und der Steifigkeitsanforderungen aus.

In einer Ausgestaltung der Erfindung ist die Triggereinrichtung als freies Ende des Deformationselementes ausgebildet, wodurch die effizientesten Kennwerte bei einem Crashvorgang erzielt werden.

Alternativ kann diese Triggereinrichtung auch an einen Längsträger bzw. Schweller über eine punktuelle oder längs einer Linie verlaufenden Anlage angebunden werden. Damit kann das Ende des Deformationselementes auch mittels einer funktionslosen Verbindung an den Längsträger bzw. an den Schweller angebunden werden.

Gemäß einer weiteren Ausgestaltung der Erfindung ist der erste Abschnitt des Querträgers derart ausgebildet, dass bei einem Bruch der Sollbruchstelle der erste Abschnitt über den zweiten Abschnitt des Querträgers schiebbar ist. Damit wird eine kontrollierte Bruchmechanik erzielt.

Ein besonders einfacher konstruktiver Aufbau des Querträgers ergibt sich gemäß einer Ausgestaltung der Erfindung, wenn sich das stirnseitige Ende des Deformationselements im Bereich der Sollbruchstelle gegen den zweiten Abschnitt des Querträgers abstützt.

Zur Verbesserung der durch den zweiten Abschnitt des Querträgers erzeugten Abstützkraft für das Deformationselement trägt der zweite Abschnitt des Querträgers eine Stützstruktur. Vorzugsweise kann sich dabei die Stützstruktur in den Bereich des ersten Abschnitts des Querträgers erstrecken. Gemäß einer Ausgestaltung der Erfindung weist der erste Abschnitt des Querträgers endseitig ein Verbindungsteil zur Anbindung an einen Längsträger, vorzugsweise einen Schweller auf, wobei vorzugsweise dieses Verbindungsteil einen Anbindungspunkt zur Anbindung weiterer Elemente der Kraftfahrzeugkarosserie, vorzugsweise einer Sitzschiene umfasst.

Damit ist eine Anbindung der Kraftfahrzeugsitze an einen solchen Sitzquerträger möglich, die sicherstellt, dass diese Sitze sich während des Crash-Vorganges nicht vollständig von der Struktur der Fahrzeugkarosserie, also insbesondere von dem Sitzquerträger bzw. Schweller lösen können. Auch ein Ineinanderschieben der beiden Abschnitte des Sitzquerträgers bewirkt, dass mit dem ersten Abschnitt verbundene Elemente der Fahrzeugkarosserie, wie bspw. Sitzschienen auch nach dem Bruch an der Sollbruchstelle des Sitzquerträgers mit dem selben und damit auch mit dem endseitig angebundenen Längsträger, vorzugsweise dem Schweller verbunden bleiben.

Weiterhin ist gemäß einer vorteilhaften Ausgestaltung der Erfindung der Querträger bzw. der Sitzquerträger als Kunststoff-Formteil, insbesondere faserverstärkt, mit einem als Metalleinlegeteil ausgeführten Verbindungselement zur Anbindung von Sitzschienen ausgebildet. Vorzugsweise ist im Bereich des zweiten Abschnitts des Sitzquerträgers wenigstens ein Metalleinlegeteil mit einem Anbindungspunkt für weitere Elemente der Fahrzeugkarosserie, insbesondere einer Sitzschiene vorgesehen. Mit solchen Metalleinlegeteilen wird eine hohe Verbindungsqualität zwischen diesen weiteren Elementen, insbesondere von Sitzschienen zur Anbindung von Fahrzeugsitzen erzielt.

Weiterhin ist es vorteilhaft, den Querträger mit einem U-förmigen Profil auszubilden, damit die Montage des Deformationselements in einen solchen Querträger erleichtert wird.

Da Faserverbundwerkstoffe sich besonders gut für energieabsorbierende Strukturen eignen, wird gemäß einer Weiterbildung der Erfindung das als Profil ausgebildete Deformationselement aus einem Faserverbundwerkstoff hergestellt. Hierzu können sowohl geschlossene als auch offene bzw. halboffene Profile verwendet werden.

Der erfindungsgemäße Querträger, insbesondere ein Sitzquerträger kann mit Vorteil in der Fahrzeugkarosserie eines Kraftfahrzeugs eingesetzt werden, indem der erste Abschnitt des Querträgers und das Deformationselement über dessen Triggereinrichtung mit einem ersten Längsträger verbunden werden, und der zweite Abschnitt des Querträgers endseitig mit einem zweiten Längsträger verbunden wird.

In einer Ausgestaltung der Erfindung ist der als Querträger ausgebildete Sitzquerträger mit seinem ersten Abschnitt mit einem Schweller der Bodenstruktur als ersten Längsträger und mit seinem zweiten Abschnitt mit einem Mittellängsträger der Bodenstruktur, vorzugsweise einem Mitteltunnel verbunden. Umgekehrt ist es auch möglich, den als Sitzquerträger ausgebildeten Querträger mit seinem ersten Abschnitt mit einem Mittellängsträger der Bodenstruktur als ersten Längsträger, vorzugsweise einem Mitteltunnel und mit seinem zweiten Abschnitt mit einem Schweller der Bodenstruktur als zweiten Längsträger zu verbinden, ohne dass auf die oben genannten Vorteile verzichtet werden muss.

Die Erfindung wird nachfolgend anhand eines Ausführungsbeispiels unter Bezugnahme auf die beigefügten Figuren ausführlich beschrieben. Es zeigen:
- Figur 1: eine schematische Darstellung eines einen Schweller und einen Mitteltunnel verbindenden erfindungsgemäßen Querträgers,
- Figur 2: eine perspektivische Darstellung einer ausschnittsweise darge-stellten Bodenstruktur einer Kraftfahrzeugkarosserie eines Kraftfahrzeugs mit einem erfindungsgemäßen Sitzquerträger,
- Figur 3: eine perspektivische Darstellung des Sitzquerträger nach Figur 2 mit eingeschobenen Deformationselement gemäß der Erfindung,
- Figur 4: eine ausschnittsweise perspektivische Darstellung auf die Unterseite des Sitzquerträgers nach Figur 3,
- Figur 5: eine perspektivische Darstellung auf die Unterseite des Sitzquerträgers nach Figur 3,
- Figur 6: eine schematische Darstellung des gecrashten erfindungsgemäßen Querträgers nach Figur 1, und
- Figur 7: ein schematisches Kraft-Weg-Diagramm der Abstützkraft des erfindungsgemäßen Querträgers nach Figur 1 und eines Querträgers gemäß Stand der Technik.

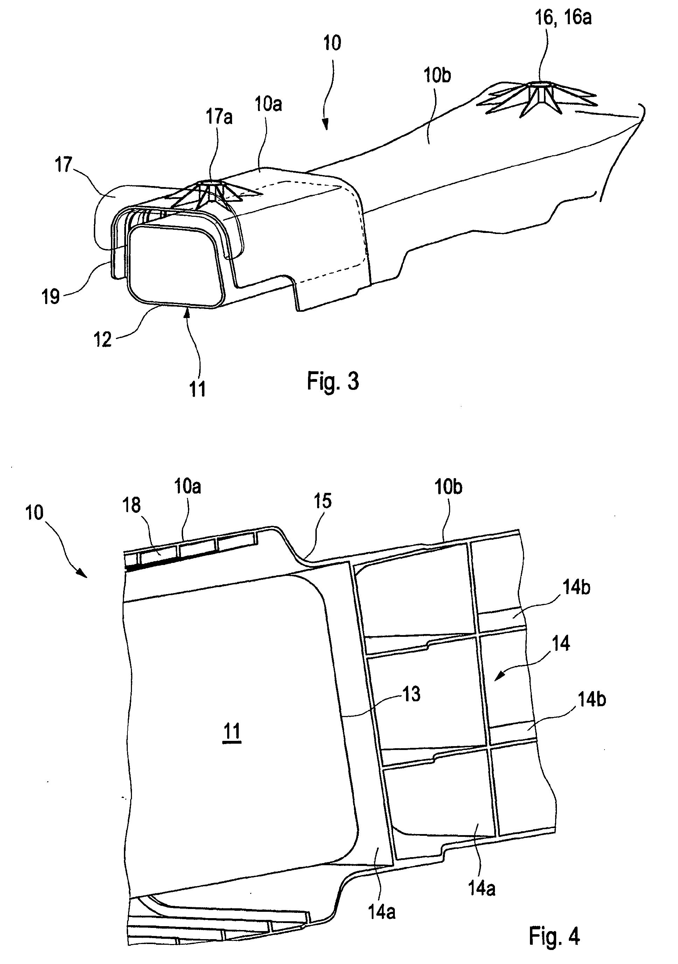

Eine in Figur 1 schematisch gezeichnete Bodenstruktur mit einem einen Mitteltunnel 2 als Mittellängsträger und einen linken Schweller 1 als äußerer Längsträger einer Fahrzeugkarosserie verbindenden Sitzquerträger 10 ist in einer ausschnittsweise perspektivisch dargestellten konstruktiven Ausgestaltung in Figur 2 dargestellt, wobei dieser Sitzquerträger 10 in Figur 3 in einer transparenten und perspektivischen Ansicht gezeigt ist.

Dieser Sitzquerträger 10 ist über seine gesamte Länge mit einem U-förmigen Profil als Kunststoff-Formteil ausgebildet und besteht aus einem ersten Abschnitt 10a und einem sich daran anschließenden zweiten Abschnitt 10b, wobei die Stirnseite 19 des ersten Abschnittes 10a an dem Schweller 1 anliegt.

Das schwellerseitige Ende des ersten Abschnittes 10a des Sitzquerträgers 10 weist ein flanschartig ausgebildetes Metalleinlegeteil 17 zur thermischen Anbindung an den Schweller 1 sowie einen Anbindungspunkt 17a zur Anbindung eines Sitzschiene (nicht dargestellt) auf. Der erste Abschnitt 10a umschließt ein Deformationselement 11, welches als Hohlprofil mit an das U-förmige Profil des Sitzquerträgers 10 angepassten rechteckförmigen Querschnitt ausgebildet ist. Jedoch ist die Breite und Höhe des Hohlprofils des Deformationselements 11 jeweils kleiner als die entsprechenden Abmessungen des U-förmigen Profils im Bereich des ersten Abschnittes 10a des Sitzquerträgers 10 gewählt, um das weiter unten erläuterte Übereinanderschieben des ersten Abschnitts 10 über den zweiten Abschnitt 10b zu ermöglichen. Um eine gleichmäßiges und hohes Lastniveau zu erreichen, ist dieses Deformationselement 11 aus einem Faserverbundwerkstoff hergestellt.

Unter Ausbildung einer Triggereinrichtung 12 bzw. S ist die Länge des Deformationselementes 11 derart ausgeführt, dass dessen schwellerseitige Stirnseite 12 frei, also gegenüber der Stirnseite 19 des ersten Abschnittes 10a in Richtung des zweiten Abschnitts 10b versetzt und somit nicht an den Schweller 1 angebunden ist. Wie insbesondere aus Figur 1 ersichtlich, besteht also ein Spalt S zwischen dem Schweller 1 und der benachbarten Stirnseite 12 des Deformationselements 11 mit der Spaltweite w.

Diese Triggereinrichtung 12 bzw. S kann auch so ausgeführt werden, dass eine punktuelle oder längs einer Linie verlaufende Anlage der Stirnseite 12 des Deformationselements 11 als Anbindung an den Schweller 1 realisiert wird.

Die schwellerabgewandte Stirnseite 13 des Deformationselementes 11 stützt sich gegen einen mit dem Mitteltunnel 2 verbundenen zweiten Abschnitt 10b des Sitzquerträgers 10 ab. Hierzu weist dieser zweite Abschnitt 10b eine Stützstruktur 14 auf, die gemäß Figur 4 bspw. wabenartig mit Aussteifungen 14a und 14b ausgebildet ist. Diese Aussteifungen bestehen aus quer zur Längsrichtung des Sitzquerträgers 10 verlaufende Wände 14a, die durch längsverlaufende Wände 14b abgestützt werden. Das Deformationselement 11 stützt sich gemäß Figur 4 am Übergang 15 zum zweiten Abschnitt 10b gegen die erste querverlaufende Wand 14a ab und ist mit derselben mittels Ultraschal- oder Vibrationsschweißen kraftschlüssig verbunden.

Der Übergang 15 vom ersten Abschnitt 10a hin zum zweiten Abschnitt 10b ist an allen drei Seiten des U-förmigen Profils des ersten Abschnittes 10a des Sitzquerträgers 10 als abfallende Stufe ausgeführt, wobei dieser Absatz eine Sollbruchstelle 15 bildet, die auf eine definierte Bruchlast eingestellt ist.

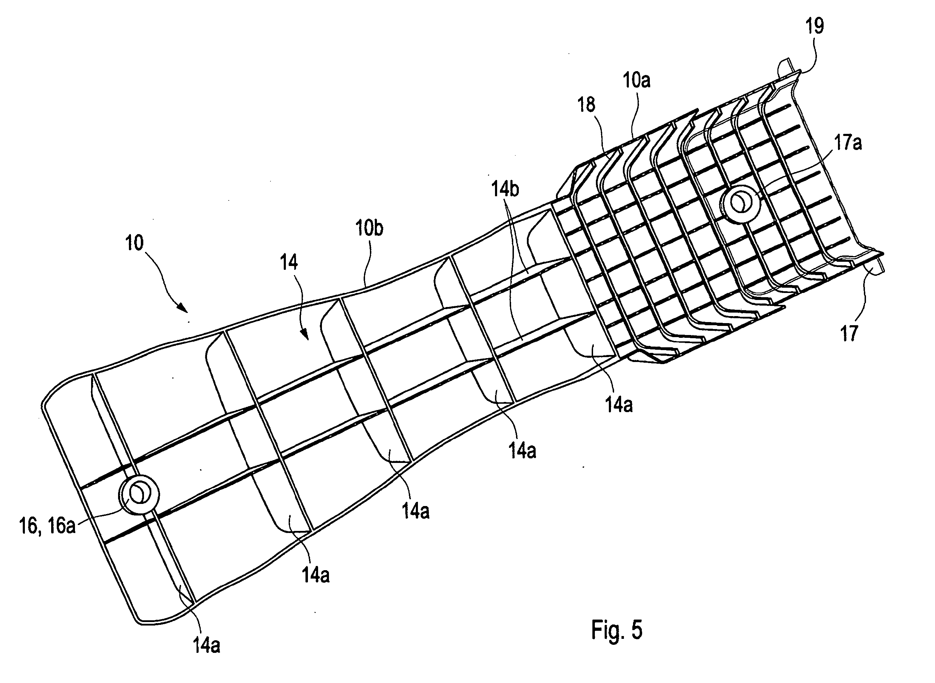

Eine Unteransicht auf einen solchen mit einem ersten und zweiten Abschnitt 10a und 10b ausgebildeten Sitzquerträger 10 zeigt Figur 5, wobei der erste Abschnitt 10a schmale Verstärkungsrippen 18 auf der inneren Oberfläche aufweist.

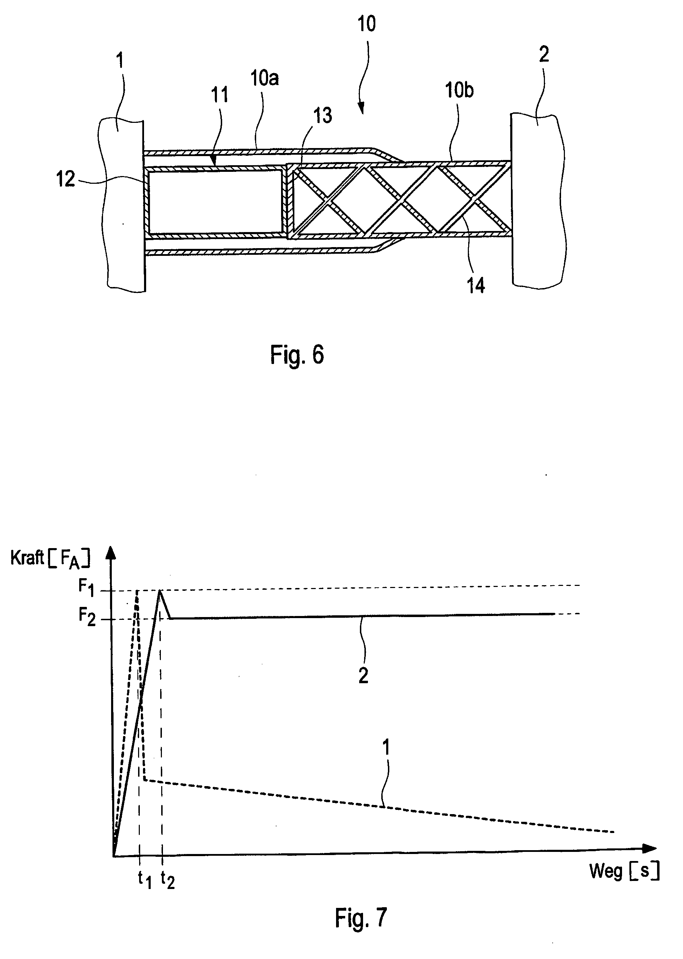

Im Folgenden wird mit Bezug auf die Figuren 6 und 7 der Verlauf eines Seitencrashs bzw. Seitenaufpralls, also eines seitlichen Fahrzeugaufpralls auf den Schweller 1 erläutert, wobei der Verlauf der Abstützkraft F_{A} des Sitzquerträgers 10 in Abhängigkeit des Deformationsweges s als Kennlinie 2 in Figur 7 dargestellt ist.

Zunächst verformt sich der Schweller 1 unter der eingeleiteten Energie bis die eingeleitete Energie die Bruchlast der Sollbruchstelle 15 erreicht. Die Sollbruchstelle ist so ausgelegt, dass sie versagt, bevor das Abstützvermögen der dahinter liegenden Struktur erreicht wird. Im weiteren Verlauf des Crash-Vorganges bricht diese Sollbruchstelle 15 unter weiterer Verformung des Schwellers 1, so dass dadurch der erste Abschnitt 10a über den Abschnitt 10b des Sitzquerträgers 10 geschoben wird. Die linear ansteigende Abstützkraft F_{A} nimmt unter weiterer Verformung des Schwellers 1 und Übereinanderschiebens der beiden Abschnitte 10a und 10b des Sitzquerträgers 10 so lange zu, bis der Schweller 1 die Spaltweite w überwunden hat und an dem freien Ende 12 des Deformationselements 11 anliegt. Dabei wird die Abstützkraft nicht von der Initialkraft zu Beginn der Deformation des Deformationselements überschritten. Zum Zeitpunkt t₂ beginnt die energieabsorbierende Deformation (Crushing) des Deformationselements 11, wie dies in Figur 6 dargestellt ist, wobei sich der erste Abschnitt 10a weiter über den zweiten Abschnitt 10b des Sitzquerträgers 10 schiebt, das Deformationselement 11 sich aber gegen die Stützstruktur 14 des zweiten Abschnittes 10b des Sitzquerträgers 10 abstützt. Während dieser Deformation des Deformationselements 11 liegt die einstellbare Abstützkraft F_{A} (Kennlinie 2) an und bleibt nahezu konstant auf diesem hohen Wert F₂ bis zum Ende des Crash-Vorganges.

Mit einem solchen Sitzquerträger 10 wird eine energieeffiziente zusätzliche Abstützung des Schwellers 1 erreicht, bei der nur eine geringe Schweller-Intrusion stattfindet. Diese Abstützung erfolgt, wie im Zusammenhang mit den Figuren 6 und 7 erläutert wurde, auf einem hohen und vor allem gleichmäßigen Kraftniveau über den gesamten Deformationsweg s. Mit einer solchen gegenüber dem Stand der Technik besseren Abstützung und effizienteren Energieabsorption wird der Schweller 1 wesentlich entlastet, infolgedessen Gewichtseinsparungen in den Knotenstrukturen an den A- und C-Säulen zum Schweller 1 möglich sind, da diese bei einer besseren Schwellerabstützung entlastet werden.

An den Sitzquerträger 10 werden über Sitzschienen (in den Figuren nicht dargestellt) die Kraftfahrzeugsitze angebunden, wobei hierzu zwei Sitzquerträger 10 erforderlich sind, jedoch in den Figuren der Einfachheit halber nur ein einziger Sitzquerträger 10 dargestellt ist.

Zur Anbindung solcher Sitzschienen dient einmal das schwellerseitige Metalleinlegeteil 17, ausgeführt als duktiles Metallinsert mit einem Anbindungspunkt 17a für eine erste Sitzschiene und zum anderen ein Einlegeteil 16 mit einem weiteren Anbindungspunkt 16a, wobei dieses Einlegeteil tunnelseitig in dem zweiten Abschnitt 10b des Sitzquerträgers 10 integriert ist.

Da einerseits, wie in den Figuren dargestellt, die Sollbruchstelle 15 im Wesentlichen in der Mitte des Sitzquerträgers 10 liegt und andererseits der Kraftfahrzeugsitz über das schwellerseitige duktile Metalleinlegeteil 17 an den Schweller 1 angebunden ist, wird ein vollständiges Lösen des Kraftfahrzeugsitzes von der Bodenstruktur des Kraftfahrzeugs während eine Crashs verhindert. Zusätzlich werden Anbindungspunkte für die Kraftfahrzeugsitze realisiert, die eine hohe Steifigkeit aufweisen. Eine solche erfindungsgemäße Bodenstruktur mit einem Sitzquerträger 10 zeichnet sich durch eine funktionale Trennung des Crash-Vorganges von der eine hohe Steifigkeit sichernden Anbindung des Kraftfahrzeugsitzes an die Bodenstruktur aus.

Die erfindungsgemäße Bodenstruktur mit dem Sitzquerträger 10 kann mit unterschiedlichen Bodenkonzepten realisiert werden. Die in Figur 2 dargestellt Bodenstruktur zeigt einen Mitteltunnel 2 und eine Bodenplatte 3 aus einem faserverstärkten Thermoplast-Werkstoff. Dabei ist der Sitzquerträger 10 mit seiner auf dieser Bodenplatte 3 und dem Mitteltunnel 2 anliegenden Kontur (einschließlich der Versteifungen 14a, 14b und Verstärkungsrippen 18) bspw. mit diesen Elementen mittels Ultraschallschweißen kraftschlüssig verbunden.

Der in den Figuren 1 bis 6 dargestellte Sitzquerträger 10 ist in der Bodenstruktur des Kraftfahrzeugs so integriert, dass das freie Ende des Deformationselements 11 gegenüber der Wandung des Schwellers 1 liegt und das Ende des zweiten Abschnitts 10b mit dem Mitteltunnel 2 verbunden ist. Ein solcher Sitzquerträger 10 kann auch so in die Bodenstruktur integriert werden, dass umgekehrt das Ende mit der Triggereinrichtung des Deformationselements 11 benachbart zum Mitteltunnel 2 liegt und das Ende des zweiten Abschnitts 10b des Sitzquerträgers 10 mit dem Schweller 1 verbunden ist.

Der in dem Ausführungsbeispiel dargestellte Querträger 10 weist eine Konstruktion auf, bei der die Stirnseite 13 des Deformationselements 11 an einer zur Stützstruktur 14 gehörenden Stirnseite des zweiten Abschnittes 10b des Querträgers 10 anliegt. Diese Stützstruktur 14 kann auch so ausgebildet werden, dass diese in Richtung des Schwellers 1 in den ersten Abschnitt 10a des Querträgers 10a ragt und mit der entsprechenden Stirnseite in Anlage mit der Stirnseite 13 des Deformationselements 11 liegt. Damit verschiebt sich die Sollbruchstelle 15 in Richtung des Mittellängsträgers 2.

Ferner kann die Bruchmechanik des ersten Abschnitts 10a des Querträgers 11 auch derart gestaltet werden, dass bei einem Aufprall dieser Abschnitt 10a nicht nur an der Sollbruchstelle 15 bricht, sondern insgesamt zerbirst ohne sich über den zweiten Abschnitt 10b des Querträgers 11 zu schieben.

### Bezugszeichen

- 1: Längsträger, Schweller
- 2: Längsträger, Mittellängsträger, Mitteltunnel
- 3: Bodenplatte

- 10: Querträger, Sitzquerträger
- 10a: erster Abschnitt des Querträgers 10
- 10b: zweiter Abschnitt des Querträgers 10
- 11: Deformationselement
- 12: freies Ende des Deformationselements 11
- 13: Ende des Deformationselements 11
- 14: Stützstruktur des zweiten Abschnitts 10b des Querträgers 10
- 14a: Querwände der Stützstruktur 14
- 14b: Längswände der Stützstruktur 14
- 15: Sollbruchstelle
- 16: Metalleinlegeteil
- 16a: Anbindungspunkt des Metalleinlegeteils 16
- 17: Metalleinlegeteil
- 17a: Anbindungspunkt des Metalleinlegeteils 17
- 18: Verstärkungsrippen
- 19: Stirnseite des ersten Abschnitts 10a

## Patentansprüche

1. Querträger (10), insbesondere Sitzquerträger für eine Kraftfahrzeugkaresserie eines Kraftfahrzeugs, insbesondere Personenkraftfahrzeug mit einem Deformationselement (11) zur Absorption von in Richtung des Querträgers (10) eingeleiteten Deformationsenergie, **dadurch gekennzeichnet, dass**
- der Querträger (10) mit einem ersten und zweiten Abschnitt (10a, 10b) ausgebildet ist, wobei der erste und zweite Abschnitt (10a, 10b) über eine Sollbruchstelle (15) miteinander verbunden sind,
- der erste Abschnitt (10a) des Querträgers (10) ausgebildet ist zur Aufnahme des Deformationselements (11), welches sich einenends gegen den zweiten Abschnitt (10b) des Querträgers (10) abstützt und andernends eine Triggereinrichtung (12) aufweist, und
- die Sollbruchstelle (15) derart ausgebildet ist, dass bei einem definierten Krafteintrag in den Querträger (10) diese Sollbruchstelle (15) bricht.

2. Querträger (10) nach Anspruch 1,
**dadurch gekennzeichnet, dass** die Triggereinrichtung (12) als freies Ende des Deformationselementes (11) ausgebildet ist.

3. Querträger (10) nach Anspruch 1,
**dadurch gekennzeichnet, dass** die Triggereinrichtung (12) ausgebildet zur punktuellen oder längs einer Linie verlaufenden Anlage des Deformationselements (11) an einen Längsträger (1).

4. Querträger (10) nach einem der vorhergehenden Ansprüche,
**dadurch gekennzeichnet, dass** der erste Abschnitt (10a) des Querträgers (10) derart ausgebildet ist, dass bei einem Bruch der Sollbruchstelle (15) der erste Abschnitt (10a) über den zweiten Abschnitt (10b) des Querträgers (10) schiebbar ist.

5. Querträger (10) nach einem der vorhergehenden Ansprüche,
**dadurch gekennzeichnet, dass** sich das stirnseitige Ende (13) des Deformationselements (11) im Bereich der Sollbruchstelle (15) gegen den zweiten Abschnitt (10b) des Querträgers (10) abstützt.

6. Querträger (10) nach einem der vorhergehenden Ansprüche,
**dadurch gekennzeichnet, dass** zur Abstützung des Deformationselementes (11) der zweite Abschnitt (10b) des Querträgers (10) eine Stützstruktur (14) aufweist.

7. Querträger (10) nach einem der Ansprüche 1 bis 4,
**dadurch gekennzeichnet, dass** zur Abstützung des Deformationselementes (11) der zweite Abschnitt (10b) des Querträgers (10) eine Stützstruktur (14) aufweist, welche sich in den Bereich des ersten Abschnitts (10a) des Querträgers (10) erstreckt.

8. Querträger (10) nach einem der vorhergehenden Ansprüche,
**dadurch gekennzeichnet, dass** der erste Abschnitt (10a) des Querträgers (10) endseitig ein Verbindungsteil (17) zur Anbindung an einen Längsträger (1) der Kraftfahrzeugkarosserie aufweist.

9. Querträger (10) nach Anspruch 8,
**dadurch gekennzeichnet, dass** das Verbindungsteil (17) einen Anbindungspunkt (17a) und der zweite Abschnitt (10b) des Querträgers (10) wenigstens einen weiteren Anbindungspunkt (16a) zur Anbindung weiterer Elemente der Kraftfahrzeugkarosserie, vorzugsweise einer Sitzschiene aufweisen.

10. Querträger (10) nach einem der vorhergehenden Ansprüche,
**dadurch gekennzeichnet, dass** der Querträger (10) als Kunststoff-Formteil, insbesondere faserverstärkt und das Verbindungsteil (17) als Metalleiniegeteil ausgebildet ist.

11. Querträger (10) nach einem der Ansprüche 9 oder 10,
**dadurch gekennzeichnet, dass** wenigstens ein weiteres Metalleinlegeteil (16) zur Bildung des Anbindungspunkt (16a), vorzugsweise zur Anbindung einer Sitzschiene vorgesehen ist.

12. Querträger (10) nach einem der vorhergehenden Ansprüche,
**dadurch gekennzeichnet, dass** das Deformationselement (11) aus einem Faserverbundwerkstoff hergestellt wird.

13. Kraftfahrzeug mit einem Querträger gemäß einem der vorhergehenden Ansprüche
**dadurch gekennzeichnet, dass**
- der erste Abschnitt (10a) des Querträgers (10) und das Deformationselement (11) über dessen Triggereinrichtung (12, S) mit einem ersten Längsträger (1) verbunden sind, und
- der zweite Abschnitt (10b) des Querträgers (10) endseitig mit einem zweiten Längsträger (2) verbunden ist.

14. Kraftfahrzeug nach Anspruch 13,
**dadurch gekennzeichnet, dass** der Querträger (10) mit seinem ersten Abschnitt (10a) mit einem Schweller der Bodenstruktur als ersten Längsträger (1) und mit seinem zweiten Abschnitt (10b) mit einem Mittellängsträger der Bodenstruktur, vorzugsweise einem Mitteltunnel als zweiter Längsträger (2) verbunden ist.

15. Kraftfahrzeug nach Anspruch 12,
**dadurch gekennzeichnet, dass** der Querträger (10) mit seinem ersten Abschnitt (10a) mit einem Mittellängsträger der Bodenstruktur, vorzugsweise einem Mitteltunnel als ersten Längsträger (2), und mit seinem zweiten Abschnitt (10b) mit einem Schweller der Bodenstruktur als zweiten Längsträger (1) verbunden ist.

## Claims

1. Cross-member (10), in particular a seat cross-member, for a motor vehicle body of a motor vehicle, in particular a passenger vehicle having a deformation element (11) for absorbing deformation energy introduced in the direction of the cross-member (10),
**characterised in that**
- the cross-member (10) is designed having a first and second portion (10a, 10b), the first and second portion (10a, 10b) being interconnected via a predetermined breaking point (15),
- the first portion (10a) of the cross-member (10) is designed to receive the deformation element (11) which at one end is supported on the second portion (10b) of the cross-member (10) and at the other end comprises a trigger device (12), and
- the predetermined breaking point (15) is designed such that said predetermined breaking point (15) breaks upon application of a specified force in the cross-member (10).

2. Cross-member (10) according to claim 1,
**characterised in that** the trigger device (12) is designed as a free end of the deformation element (11).

3. Cross-member (10) according to claim 1,
**characterised in that** the trigger device (12) is designed to provide contact between the deformation element (11) and a longitudinal member (1), either at particular points or extending along a line.

4. Cross-member (10) according to any of the preceding claims,
**characterised in that** the first portion (10a) of the cross-member (10) is designed such that the first portion (10a) can slide over the second portion (10b) of the cross-member (10) upon breaking of the predetermined breaking point (15).

5. Cross-member (10) according to any of the preceding claims,
**characterised in that** the end-face end (13) of the deformation element (11) is supported on the second portion (10b) of the cross-member (10) in the region of the predetermined breaking point (15).

6. Cross-member (10) according to any of the preceding claims,
**characterised in that** the second portion (10b) of the cross-member (10) comprises a support structure (14) for supporting the deformation element (11).

7. Cross-member (10) according to any of claims 1 to 4,
**characterised in that** the second portion (10b) of the cross-member (10) comprises a support structure (14) for supporting the deformation element (11), which support structure extends into the region of the first portion (10a) of the cross-member (10).

8. Cross-member (10) according to any of the preceding claims,
**characterised in that** the first portion (10a) of the cross-member (10) comprises a connection part (17) at its end for attaching to a longitudinal member (1) of the motor vehicle body.

9. Cross-member (10) according to claim 8,
**characterised in that** the connection part (17) comprises an attachment point (17a) and the second portion (10b) of the cross-member (10) comprises at least one further attachment point (16a) for attaching further elements of the motor vehicle body, preferably a seat rail.

10. Cross-member (10) according to any of the preceding claims,
**characterised in that** the cross-member (10) is designed as a moulded part made of plastics material, in particular fibre-reinforced, and the connection part (17) is designed as a metal insert.

11. Cross-member (10) according to either claim 9 or claim 10, **characterised in that** at least one further metal insert (16) is provided for forming the attachment point (16a), preferably for attaching a seat rail.

12. Cross-member (10) according to any of the preceding claims, **characterised in that** the deformation element (11) is produced from a fibre composite material.

13. Motor vehicle having a cross-member according to any of the preceding claims,
**characterised in that**
- the first portion (10a) of the cross-member (10) and the deformation element (11) are connected to a first longitudinal member (1) via the trigger device (12, S) of said deformation element, and
- the second portion (10b) of the cross-member (10) is connected at its end to a second longitudinal member (2).

14. Motor vehicle according to claim 13,
**characterised in that** the cross-member (10) is connected via its first portion (10a) to a sill of the base structure as a first longitudinal member (1), and via its second portion (10b) to a central longitudinal member of the base structure, preferably a central tunnel, as a second longitudinal member (2).

15. Motor vehicle according to claim 12,
**characterised in that** the cross-member (10) is connected via its first portion (10a) to a central longitudinal member of the base structure, preferably a central tunnel, as a first longitudinal member (2), and via its second portion (10b) to a sill of the base structure as a second longitudinal member (1).

## Revendications

1. Traverse (10), en particulier traverse de siège pour une carrosserie de véhicule automobile d'un véhicule automobile, en particulier une voiture de tourisme, avec un élément de déformation (11) destiné à absorber une énergie de déformation introduite en direction de la traverse (10),
**caractérisée en ce que**
- la traverse (10) est constituée d'un premier et d'un deuxième tronçon (10a, 10b), le premier et le deuxième tronçon (10a, 10b) étant raccordés l'un à l'autre par le biais d'un emplacement de rupture prédéterminée (15),
- le premier tronçon (10a) de la traverse (10) est constitué pour loger l'élément de déformation (11) qui s'appuie à une extrémité contre le deuxième tronçon (10b) de la traverse (10) et qui présente à l'autre extrémité un dispositif de déclenchement (12), et
- l'emplacement de rupture prédéterminée (15) est constitué de telle sorte que cet emplacement de rupture prédéterminée (15) se rompt en cas d'une application de force définie dans la traverse (10).

2. Traverse (10) selon la revendication 1,
**caractérisée en ce que** le dispositif de déclenchement (12) est constitué en tant qu'extrémité libre de l'élément de déformation (11).

3. Traverse (10) selon la revendication 1,
**caractérisée en ce que**
le dispositif de déclenchement (12) est constitué pour un appui, ponctuel ou le long d'une ligne, de l'élément de déformation (11) sur un longeron (1).

4. Traverse (10) selon une des revendications précédentes,
**caractérisée en ce que**
le premier tronçon (10a) de la traverse (10) est constitué de telle sorte que, lors d'une rupture de l'emplacement de rupture prédéterminée (15), le premier tronçon (10a) peut coulisser sur le deuxième tronçon (10b) de la traverse (10).

5. Traverse (10) selon une des revendications précédentes,
**caractérisée en ce que**
l'extrémité (13) côté frontal de l'élément de déformation (11) s'appuie, dans la zone de l'emplacement de rupture prédéterminée (15), contre le deuxième tronçon (10b) de la traverse (10).

6. Traverse (10) selon une des revendications précédentes,
**caractérisée en ce que**,
pour le soutien de l'élément de déformation (11), le deuxième tronçon (10b) de la traverse (10) présente une structure d'appui (14).

7. Traverse (10) selon une des revendications 1 à 4,
**caractérisée en ce que**,
pour le soutien de l'élément de déformation (11), le deuxième tronçon (10b) de la traverse (10) présente une structure d'appui (14) qui s'étend dans la zone du premier tronçon (10a) de la traverse (10).

8. Traverse (10) selon une des revendications précédentes,
**caractérisée en ce que**
le premier tronçon (10a) de la traverse (10) présente, côté extrémité, une pièce de raccordement (17) pour le rattachement à un longeron (1) de la carrosserie de véhicule automobile.

9. Traverse (10) selon la revendication 8,
**caractérisée en ce que**
la pièce de raccordement (17) présente un point de rattachement (17a), et le deuxième tronçon (10b) de la traverse (10) présente au moins un autre point de rattachement (16a) pour le rattachement d'autres éléments de la carrosserie de véhicule automobile, de préférence un rail de siège.

10. Traverse (10) selon une des revendications précédentes,
**caractérisée en ce que**
la traverse (10) est constituée en tant que pièce moulée en matière plastique, en particulier renforcée de fibres de verre, et la pièce de raccordement (17) est constituée en tant qu'insert métallique.

11. Traverse (10) selon une des revendications 9 ou 10,
**caractérisée en ce**
**qu'**au moins un autre insert métallique (16) est prévu pour la formation du point de rattachement (16a), de préférence pour le rattachement d'un rail de siège.

12. Traverse (10) selon une des revendications précédentes,
**caractérisée en ce que**
l'élément de déformation (11) est fabriqué en un matériau composite à base de fibres.

13. Véhicule avec une traverse selon une des revendications précédentes, **caractérisé en ce que**
- le premier tronçon (10a) de la traverse (10) et l'élément de déformation (11) sont raccordés à un premier longeron (1) par le biais du dispositif de déclenchement (12, S) de l'élément de déformation, et
- le deuxième tronçon (10b) de la traverse (10) est, côté extrémité, raccordé à un deuxième longeron (2).

14. Véhicule selon la revendication 13,
**caractérisé en ce que**
la traverse (10) est, par son premier tronçon (10a), raccordée à un bas de marche de la structure de plancher en tant que premier longeron (1), et raccordée, par son deuxième tronçon (10b), à un longeron central de la structure de plancher, de préférence un tunnel central en tant que deuxième longeron (2).

15. Véhicule selon la revendication 12,
**caractérisé en ce que**
la traverse (10) est, par son premier tronçon (10a), raccordée à un longeron central de la structure de plancher, de préférence un tunnel central en tant que premier longeron (2) et, par son deuxième tronçon (10b), raccordée à un bas de marche de la structure de plancher en tant que deuxième longeron (1).
